(19) **Europäisches Patentamt / European Patent Office / Office européen des brevets**

(11) **EP 3 586 085 B1**

(12) **FASCICULE DE BREVET EUROPEEN**

(45) Date de publication et mention de la délivrance du brevet:
**01.04.2026 Bulletin 2026/14**

(21) Numéro de dépôt: **18709663.1**

(22) Date de dépôt: **19.02.2018**

(51) Classification Internationale des Brevets (IPC):
*G01C 21/20* (2006.01)   *G05D 1/00* (2024.01)
*G08G 5/00* (2025.01)   *B64G 1/36* (2006.01)

(52) Classification Coopérative des Brevets (CPC):
**G01C 21/20; B64G 1/008; B64G 1/242; B64G 1/36; B64G 1/52; G08G 5/21; G08G 5/26; G08G 5/53; G08G 5/55;** G08G 5/59

(86) Numéro de dépôt international:
**PCT/FR2018/000030**

(87) Numéro de publication internationale:
**WO 2018/154191 (30.08.2018 Gazette 2018/35)**

(54) **PROCÉDÉ ET DISPOSITIF DE SURVEILLANCE DE L'INTÉGRITÉ D'UNE TRAJECTOIRE D'UN ENGIN VOLANT, SPATIAL OU AÉRIEN**

VERFAHREN UND VORRICHTUNG ZUR ÜBERWACHUNG DER INTEGRITÄT DER FLUGBAHN EINES RAUM- ODER LUFTFAHRZEUGS

METHOD AND DEVICE FOR MONITORING THE INTEGRITY OF A TRAJECTORY OF A SPACE- OR AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2017 FR 1700174**

(43) Date de publication de la demande:
**01.01.2020 Bulletin 2020/01**

(73) Titulaire: **ArianeGroup SAS**
**78130 Les Mureaux (FR)**

(72) Inventeur: **VOURC'H, Sébastien**
**78190 Trappes (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 2 811 357    FR-A1- 2 916 530**
**US-B2- 9 429 403**

## Description

La présente invention concerne un procédé et un dispositif de surveillance de l'intégrité d'une trajectoire de vol d'un engin volant, spatial ou aérien.

La présente invention a pour objet de surveiller la trajectoire suivie par un engin (ou véhicule) volant, pour vérifier qu'elle reste dans des limites données, par rapport à une trajectoire de référence.

Bien que non exclusivement, la présente invention s'applique plus particulièrement à un engin spatial, tel qu'un lanceur spatial destiné à amener des objets, par exemple des satellites, dans l'espace.

Dans le cas d'un lanceur spatial, il est en effet impératif de s'assurer que le lanceur spatial suive bien la trajectoire prédéterminée qui lui est allouée et d'être en mesure de détecter en temps réel tout écartement de son vol par rapport à la trajectoire prédéterminée, pour pouvoir prendre les décisions appropriées le cas échéant. En particulier, il peut être nécessaire de pouvoir neutraliser le lanceur spatial s'il s'avère qu'il s'écarte de la trajectoire prévue, un tel écartement étant représentatif d'un problème de fonctionnement, pour éviter qu'il ne s'écrase (ou que des débris ne tombent) sur des zones particulières de la Terre, notamment des zones habitées.

On connaît, par le document US-9 429 403, un dispositif et une méthode pour interrompre automatiquement le vol d'un véhicule aérien, notamment d'un lanceur spatial. Ce document prévoit de déterminer un état du véhicule à partir de traitements réalisés à l'aide de données reçues de capteurs embarqués, et de comparer cet état du véhicule à des règles de la mission, une éventuelle interruption du vol dépendant de cette comparaison. Le document US-9 429 403 ne précise pas le mode de calcul des paramètres utilisés pour la comparaison.

On connaît également le document FR2916530 qui surveille la trajectoire d'un aéronef vis-à-vis d'un couloir fixé autour d'une trajectoire de référence en tenant compte des erreurs de positionnement.

La présente invention concerne un procédé de surveillance (automatique) de l'intégrité de la trajectoire d'un engin volant, spatial, ou aérien selon la revendication 1.

Ainsi, grâce à l'invention, on obtient un procédé de surveillance apte à détecter automatiquement, de façon précise et en temps réel, un écartement (ou dérive) de l'engin volant, notamment un engin spatial, par rapport à la trajectoire de référence qu'il doit suivre (et qui est connue avant le vol), afin de pouvoir prendre les décisions qui s'imposent dans cette situation.

De façon avantageuse, ledit procédé comprend également une étape de détermination de valeurs courantes de paramètres de l'engin volant.

Avantageusement, la deuxième étape de calcul calcule la seconde distance à l'aide de l'écart-type de valeurs courantes ainsi déterminées de paramètres de l'engin volant et d'un risque d'intégrité.

Dans un mode de réalisation préféré, l'étape de détermination de position consiste à déterminer la position courante de l'engin à partir de données inertielles dudit engin volant.

Par ailleurs, dans un mode de réalisation préféré, la trajectoire de référence prédéterminée définit, à des points successifs, la position, la vitesse et l'attitude de l'engin volant.

Ainsi, on connaît, en plus de la position, également la vitesse et l'attitude de l'engin volant.

En outre avantageusement :

- l'étape de comparaison consiste également à comparer la valeur de comparaison à une limite auxiliaire prédéterminée, ladite limite auxiliaire étant inférieure à ladite limite ; et
- l'étape d'alerte consiste à émettre un message d'alerte auxiliaire si ladite valeur de comparaison est supérieure à ladite limite auxiliaire.

Le procédé de surveillance peut être appliqué à un engin spatial qui doit suivre une trajectoire de référence prédéterminée. Il peut également être appliqué à un engin aérien qui doit suivre une trajectoire de référence prédéterminée.

Toutefois, dans un mode de réalisation préféré, l'engin volant est un lanceur spatial.

Aussi, dans un premier mode de réalisation, ladite trajectoire de référence prédéterminée est une trajectoire de montée du lanceur spatial, tandis que, dans un second mode de réalisation, ladite trajectoire de référence prédéterminée est une trajectoire de descente (c'est-à-dire de retour sur Terre) du lanceur spatial.

De plus, avantageusement, ledit procédé de surveillance comporte une étape de neutralisation consistant à neutraliser l'engin volant lorsqu'un message d'alerte est émis à l'étape d'alerte. La neutralisation peut correspondre à la destruction de l'engin volant ou à d'autres actions qui n'entraînent pas forcément sa destruction.

La présente invention concerne également un dispositif de surveillance de l'intégrité de la trajectoire d'un engin volant, spatial ou aérien selon la revendication 9.

Dans un mode de réalisation particulier, ledit dispositif de surveillance comporte également une unité de détermination de valeurs courantes de paramètres de l'engin volant.

En outre, dans un mode de réalisation préféré, l'unité de détermination de position est une centrale inertielle qui détermine la position courante de l'engin à partir de données inertielles.

Par ailleurs, avantageusement, ladite deuxième unité de calcul est configurée pour calculer la seconde distance à l'aide de l'écart-type de valeurs courantes déterminées de l'engin volant et d'un risque d'intégrité.

Les figures annexées feront bien comprendre comment l'invention peut être réalisée. Sur ces figures, des références identiques désignent des éléments semblables.

La figure 1 est le schéma synoptique d'un mode de réalisation particulier d'un dispositif de surveillance conforme à l'invention.

Les figures 2, 4 et 5 représentent différents graphiques permettant de bien comprendre les différentes limites prévues et les comparaisons mises en œuvre lors de la surveillance, dans le cas d'une application à un lanceur spatial.

La figure 3 illustre schématiquement un procédé de surveillance mis en œuvre par un dispositif de surveillance conforme à l'invention.

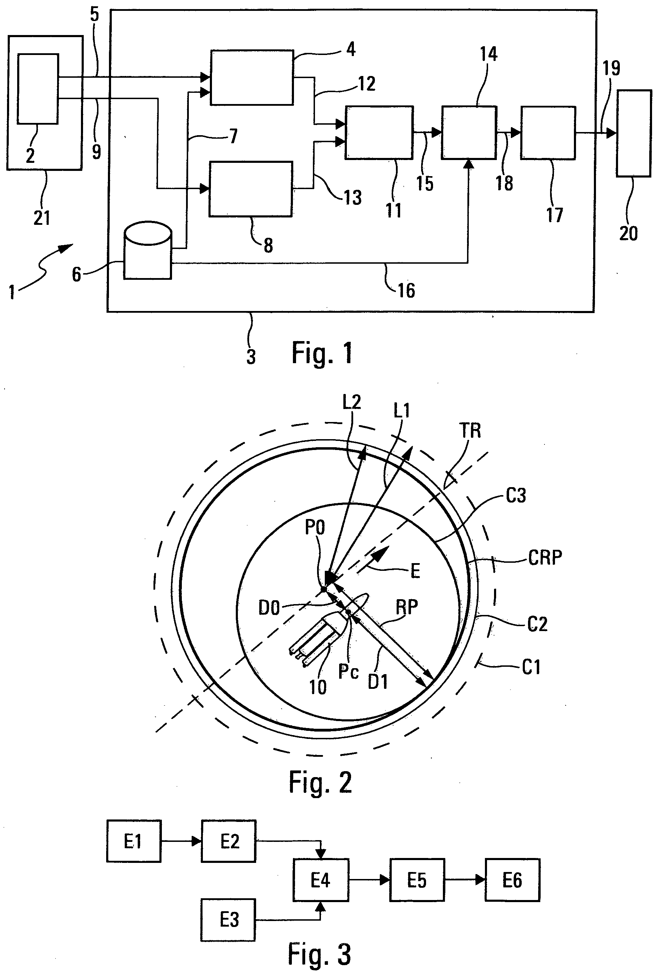

Le dispositif 1 permettant d'illustrer l'invention et représenté schématiquement sur la figure 1, est destiné à surveiller l'intégrité d'une trajectoire (de vol) d'un engin (ou véhicule) volant 10 (figure 2), à savoir un engin volant spatial ou aérien.

Dans l'exemple préféré décrit ci-dessous, l'engin volant 10 est un lanceur spatial qui doit suivre une trajectoire de référence TR prédéterminée (figure 2).

Toutefois, le dispositif peut également s'appliquer à tout engin volant spatial, mais également aérien, qui doit suivre une telle trajectoire de référence prédéterminée.

Selon l'invention, ledit dispositif de surveillance 1 comporte, comme représenté sur la figure 1 en lien avec la figure 2 :

- une unité de détermination de position 2 configurée pour déterminer, en temps réel, la position courante Pc de l'engin volant 10 lors d'un déplacement (vol) de ce dernier suivant la trajectoire de référence (de vol) TR prédéterminée, dans le sens illustré par une flèche E sur la figure 2 ; et
- une unité centrale 3.

Selon l'invention, ladite unité centrale 3 comprend :

- une unité de calcul 4 configurée pour calculer, en temps réel, une première distance D0 entre ladite position courante Pc (reçue via une liaison 5 de l'unité de détermination de position 2) et une position théorique (ou planifiée) P0, qui est enregistrée dans une base de données 6 et reçue via une liaison 7. La position théorique P0 correspond à la position qu'aurait l'engin volant 10 s'il se trouvait exactement sur la trajectoire de référence TR prédéterminée qu'il est en train de suivre lors de son vol ;
- une unité de calcul 8 configurée pour calculer, comme précisé ci-dessous, une seconde distance D1 à partir d'une incertitude prédéterminée de ladite unité de détermination de position 2, reçue de cette dernière via une liaison 9 ;
- une unité de calcul 11 configurée pour sommer ladite première distance D0 (reçue de l'unité de calcul 4 via une liaison 12) et ladite seconde distance D1 (reçue de l'unité de calcul 8 via une liaison 13) afin de déterminer une valeur de comparaison RP ;
- une unité de comparaison 14 configurée pour comparer la valeur de comparaison RP (reçue de l'unité de calcul 11 via une liaison 15) à au moins une limite L1 prédéterminée, reçue de la base de données 6 via une liaison 16. Ladite limite L1 est associée à ladite trajectoire de référence TR prédéterminée, comme précisé ci-dessous ; et
- une unité d'alerte 17 qui est reliée par l'intermédiaire d'une liaison 18 à l'unité de comparaison 14 et qui est configurée pour émettre un message (ou signal) d'alerte si, d'après la comparaison mise en œuvre par l'unité de comparaison 14, ladite valeur de comparaison RP est supérieure à ladite limite L1 prédéterminée.

Ce message d'alerte peut être émis via une liaison 19 à au moins un système utilisateur 20 précisé ci-dessous. Ce système utilisateur 20 peut correspondre à tout système pour lequel le message d'alerte peut avoir un intérêt. Il peut s'agir d'un système embarqué, tel qu'un élément de neutralisation comme précisé ci-dessous. Il peut également s'agir d'un système de transmission d'informations qui transmet le message d'alerte vers le sol ou vers un autre engin volant, directement ou via un ou des relais.

Par ailleurs, dans un mode de réalisation particulier :

- l'unité de comparaison 14 consiste également à comparer la valeur de comparaison RP au moins à une limite auxiliaire L2, ladite limite auxiliaire L2 étant inférieure à ladite limite L1 ; et
- l'unité d'alerte 17 consiste à émettre un message d'alerte auxiliaire si ladite valeur de comparaison RP est supérieure à ladite limite auxiliaire L2.

La limite auxiliaire L2 peut être une limite pour prévenir par un signal approprié (ledit message d'alerte auxiliaire) l'approche de la limite L1 pour laquelle le signal d'alerte sera émis.

Sur l'exemple de la figure 1 :

- la limite L1 est mise en évidence par un cercle C1 dont le centre correspond à la position P0, et qui présente un rayon L1. Dans l'espace, C1 est une sphère de centre P0 et de rayon L1 ;
- la limite auxiliaire L2 est mise en évidence par un cercle C2 dont le centre correspond à la position P0, et qui présente un rayon L2. Dans l'espace, C2 est une sphère de centre P0 et de rayon L2 ; et
- la valeur de comparaison RP est mise en évidence par un cercle CRP dont le centre correspond à la position P0, et qui présente un rayon RP. Dans l'espace, CRP est une sphère de centre P0 et de rayon RP.

Bien entendu, les paramètres (cercles C1, C2, CRP) représentés en plan sur la figure 2 correspondent, de préférence, à des paramètres (sphères) définis dans l'espace.

On a également représenté sur la figure 2, une limite d'erreur estimée sous forme d'un cercle (ou sphère) C3 de centre Pc et de rayon D1, qui illustre l'erreur de position due à l'incertitude de l'unité 2, autour de la position courante Pc de l'engin volant 10.

Dans le cadre de la présente invention, les messages d'alerte et d'alerte auxiliaire peuvent être différents types de message. Généralement, le message d'alerte auxiliaire qui est généré avant le message d'alerte, est généré pour prévenir que le message d'alerte va être émis. Ce message d'alerte peut notamment être un message d'intervention (ou de neutralisation), tel qu'un message ordonnant la destruction de l'engin volant.

Dans un mode de réalisation particulier, ledit dispositif de surveillance 1 comporte également un ensemble 21 de sources d'informations. Cet ensemble 21 est configuré pour déterminer, de façon usuelle, les valeurs courantes de paramètres de l'engin volant, qui sont transmises via des liaisons, par exemple les liaisons 5 et 9, à l'unité centrale 3.

Dans un mode de réalisation particulier, l'ensemble 21 détermine, en temps réel, également les valeurs courantes de la vitesse et de l'attitude de l'engin volant 10, et transmet ces valeurs courantes à l'unité centrale 3.

Dans un mode de réalisation préféré, la trajectoire de référence prédéterminée TR permet de définir, à des points successifs, la position P0, la vitesse et l'attitude de l'engin volant 10.

Les traitements précités concernent ainsi, non seulement la position, mais peuvent également s'appliquer à la vitesse et à l'attitude.

Dans le cadre de la présente invention, la trajectoire de référence TR est déterminée antérieurement au vol de l'engin volant. Elle est donc connue avant le vol. De préférence, cette trajectoire de référence TR est définie pour tout le vol envisagé de l'engin volant. Par exemple, pour une trajectoire de montée d'un lanceur spatial, elle est définie à partir du tir du lanceur spatial jusqu'à la fin de la mission mise en œuvre par le lanceur spatial, par exemple à la libération d'un satellite emporté.

De plus, dans le cadre de la présente invention, la limite L1 et éventuellement la limite auxiliaire L2 sont également déterminées avant le vol en lien avec ladite trajectoire de référence TR. Elles permettent de définir l'espace autour de la trajectoire de référence TR dans lequel doit être situé l'engin volant.

L'unité de détermination de position 2 peut faire partie dudit ensemble 21.

Dans un mode de réalisation préféré, l'unité de détermination de position 2 est une centrale inertielle usuelle de l'engin volant 10, qui détermine de façon usuelle la position courante Pc de l'engin volant 10 à partir de données inertielles.

En variante, la position courante Pc de l'engin volant 10 peut être déterminée par d'autres moyens usuels embarqués. A titre d'illustration, l'unité de détermination de position peut correspondre à un système de positionnement par satellites, de type GPS, Galileo ou autre. Elle peut également correspondre à un système hybride utilisant, de façon usuelle, des valeurs inertielles d'une centrale inertielle et des valeurs de positionnement d'un tel système de positionnement par satellites.

Par ailleurs, la base de données 6 peut être intégrée dans l'unité centrale 3, comme dans l'exemple représenté sur la figure 1, ou être externe à cette unité centrale 3.

En outre, l'unité de calcul 8 est configurée pour calculer la distance D1 à l'aide de l'écart-type de valeurs courantes de paramètres de l'engin volant, déterminées par l'ensemble 21, ainsi que d'un risque d'intégrité RI.

A titre d'illustration, l'unité de calcul 8 calcule la distance D1 en mettant en œuvre le mode de calcul suivant.

Dans le cas d'une seule dimension, la distance D1 est obtenue à partir de la relation suivante :

$$D1 = \sqrt{2} * erfc^{-1}(RI) * \sigma$$

dans laquelle :

- *erfc* la fonction d'erreur complémentaire ;
- *RI* est le risque d'intégrité, c'est-à-dire la probabilité spécifiée qu'un paramètre soit supérieur à une limite définie sans alerte ; et
- $\sigma$ est l'écart-type des paramètres surveillés (position, vitesse, attitude).

En outre, dans le cas de deux dimensions, la distance D1 est obtenue à partir de la relation suivante :

$$D1 = \sqrt{-2 * \ln(RI)} * \sqrt{\max(COV)}$$

dans laquelle :

- ln est la fonction logarithmique ; et
- *COV* est la valeur propre de la covariance à deux dimensions.

Des calculs précédents à une seule dimension ou à deux dimensions, on déduit facilement le calcul de la distance D1 dans l'espace (à trois dimensions).

Le risque d'intégrité RI utilisé dans le calcul de D1 est associé à l'unité de détermination de position 2 utilisée. Ce risque d'intégrité est déterminé de façon usuelle pour chaque unité de détermination de position 2.

Le dispositif 1, tel que décrit ci-dessus, permet de détecter automatiquement, de façon précise et en temps réel, un écartement (ou dérive) de l'engin volant, notamment un engin spatial, par rapport à la trajectoire de référence TR qu'il doit suivre, afin de pouvoir prendre les décisions qui s'imposent.

Pour ce faire, ledit dispositif 1 met en oeuvre, de façon automatique et répétitive, lors d'un déplacement (vol) de l'engin volant 10, les étapes E1 à E6 suivantes, représentées sur la figure 3 (et définies ci-dessous en lien avec les figures 1 et 2) :

- une étape de détermination de position E1, mise en œuvre par l'unité de détermination de position 2, consistant à déterminer la position courante Pc de l'engin volant 10 ;
- une étape de calcul E2, mise en œuvre par l'unité de calcul 4, consistant à calculer la distance D0 entre ladite position courante Pc et la position théorique P0 ;
- une étape de calcul E3, mise en œuvre par l'unité de calcul 8, consistant à calculer la distance D1 à partir d'une incertitude prédéterminée de l'unité de détermination de position 2, par exemple de la manière indiquée ci-dessus ;
- une étape de calcul E4, mise en œuvre par l'unité de calcul 11, consistant à sommer la distance D0 et la distance D1 pour déterminer la valeur de comparaison RP (RP=D0+D1) ;
- une étape de comparaison E5, mise en œuvre par l'unité de comparaison 14, consistant à comparer la valeur de comparaison RP à la limite (principale) L1 prédéterminée, et éventuellement à la limite auxiliaire L2 prédéterminée ; et
- une étape d'alerte E6, mise en œuvre par l'unité d'alerte 17, consistant à émettre un message d'alerte dès que ladite valeur de comparaison RP devient supérieure à ladite limite L1 (et le cas échéant un message d'alerte auxiliaire dès que ladite valeur de comparaison RP devient supérieure à ladite limite L2).

La suite d'étapes E1 à E5 successives précédentes est mise en œuvre de façon répétitive (ou itérative) au cours du vol. L'étape d'alerte E6 est, quant à elle, uniquement mise en œuvre lorsqu'un message d'alerte doit être émis.

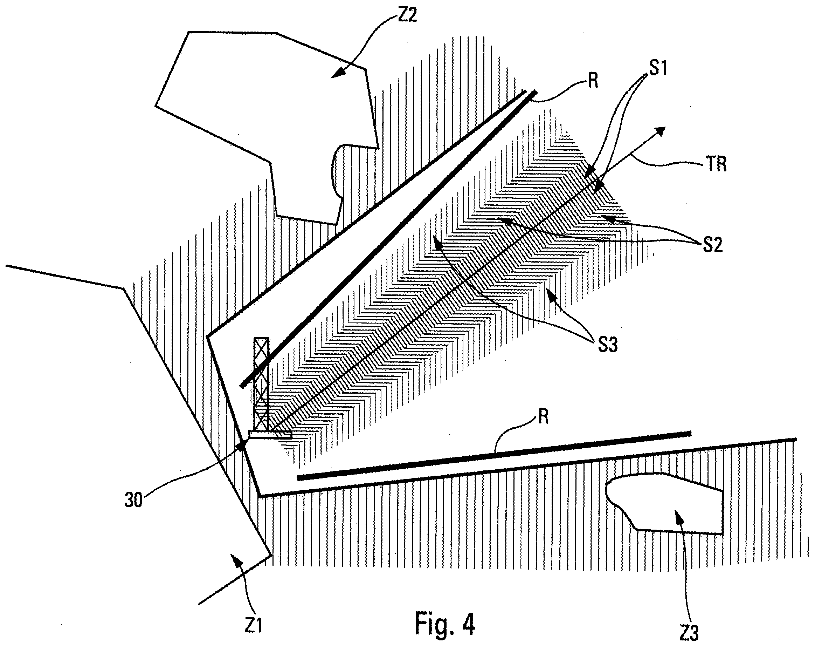

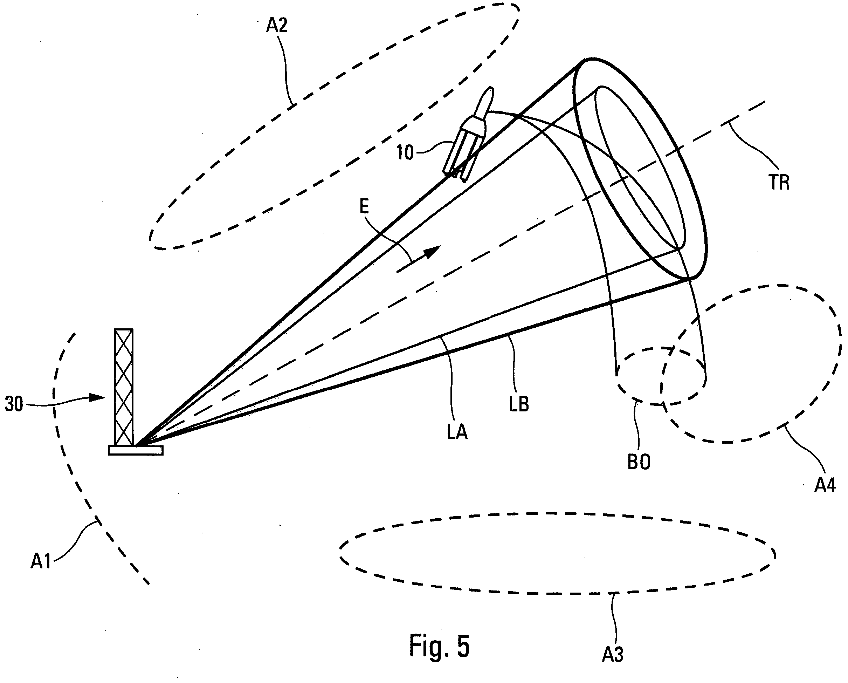

On présente ci-après une application préférée de l'invention relative à un lanceur spatial 10, en référence aux figures 4 et 5.

Dans le mode de réalisation particulier considéré, la trajectoire de référence TR prédéterminée est une trajectoire de montée d'un lanceur spatial 10, telle que représentée sur les figures 4 et 5.

En variante (non représentée), ladite trajectoire de référence prédéterminée peut être une trajectoire de descente (c'est-à-dire de retour sur Terre) d'un lanceur spatial.

Dans le mode de réalisation particulier considéré, le lanceur spatial 10 comporte un élément de neutralisation apte à le neutraliser lorsqu'un message d'alerte est émis. Cet élément de neutralisation peut faire partie du système utilisateur 20 et peut comporter de manière non limitative une charge explosive et un moyen de déclenchement de cette charge explosive ou de moyens de passivation.

Sur les figures 4 et 5, on a représenté :

- un poste de lancement (ou de tir) 30, à partir duquel est lancé le lanceur spatial 10 ;
- des zones Z1, Z2 et Z3 au sol à protéger (figure 4). Ces zones Z1, Z2 et Z3 sont délimitées respectivement par des limites A1, A2 et A3 représentées sur la figure 5 (qui montre, de plus, une limite A4) ;
- la trajectoire de référence TR que doit suivre le lanceur spatial 10.

On a également représenté sur la figure 4 :

- une zone S1 qui est définie autour de la trajectoire de référence TR et qui présente, de préférence, une forme conique s'évasant en s'écartant du poste de lancement 30. Cette zone S1 illustre la zone dans laquelle doit se trouver le lanceur spatial 10 dans un vol nominal ;
- une zone S2 (de forme conique) illustrant une limite d'alerte LA représentée sur la figure 5. Cette limite d'alerte LA peut correspondre à la limite L2 de la figure 2 ;
- une zone S3 (de forme conique) illustrant une limite de neutralisation LB représentée sur la figure 5. Cette limite de neutralisation LB peut correspondre à la limite L1 de la figure 2.

Ainsi, à titre d'illustration, si lors du vol du lanceur spatial 10, le dispositif de surveillance 1 embarqué détecte de la manière précisée ci-dessus, que le lanceur spatial 10 s'écarte de la trajectoire de référence TR et que la valeur de comparaison RP atteint la limite LA, l'unité d'alerte 17 émet un message d'alerte.

Dans le mode de réalisation particulier considéré, la limite de neutralisation LB, en l'occurrence de destruction, est définie pour éviter que des débris du lanceur spatial 10 ne touchent au moins l'une des zones Z1, Z2, Z3 à protéger sur Terre, en cas de destruction dudit lanceur spatial 10 lorsqu'il suit la trajectoire de référence TR.

Ceci permet d'éviter que la zone B0, sur laquelle risquent de tomber des débris du lanceur spatial 10 au moment de sa destruction, ne touche une zone à protéger, comme représenté sur la figure 5 où une partie de la zone B0 de retombée passe à l'intérieur de la limite A4 d'une zone à protéger.

**Revendications**

**1.** Procédé de surveillance de l'intégrité d'une trajectoire d'un engin volant, spatial ou aérien, comprenant une suite d'étapes mise en œuvre de façon automatique et répétitive, lors d'un vol de l'engin volant (10), la suite d'étapes comprenant :

- une étape de détermination de position (E1), mise en œuvre par une unité de détermination de position (2), consistant à déterminer la position courante (Pc) de l'engin volant (10) suivant une trajectoire de référence (TR) prédéterminée ;

le procédé étant **caractérisé en ce qu'**il comprend la suite d'étape suivante:

- une première étape de calcul (E2), mise en œuvre par une première unité de calcul (4), consistant à calculer une première distance (DO) entre ladite position courante (Pc) et une position théorique (PO), la position théorique (PO) correspondant à la position de l'engin volant (10) sur la trajectoire de référence (TR) prédéterminée suivie par ledit engin volant (10) ;
- une deuxième étape de calcul (E3), mise en œuvre par une deuxième unité de calcul (8), consistant à calculer une seconde distance (D1) à partir d'une incertitude prédéterminée de ladite unité de détermination de position (2) ;
- une troisième étape de calcul (E4), mise en œuvre par une troisième unité de calcul (11), consistant à sommer ladite première distance (D0) et ladite seconde distance (D1) pour déterminer une valeur de comparaison (RP) ; et
- une étape de comparaison (E5), mise en œuvre par une unité de comparaison (14), consistant à comparer la valeur de comparaison (RP) à une limite prédéterminée (L1, LB), la limite prédéterminée (L1, LB) étant associée à ladite trajectoire de référence (TR) prédéterminée,

ledit procédé comprenant également :

- une étape d'alerte (E6), mise en œuvre par une unité d'alerte (17), consistant à émettre un message d'alerte si ladite valeur de comparaison (RP) est supérieure à ladite limite (L1, LB) prédéterminée ;
- une étape préliminaire à la suite d'étapes et consistant à déterminer ladite trajectoire de référence (TR) ainsi que ladite limite ;

la limite (L1, LB) prédéterminée étant définie pour éviter que des débris de l'engin volant (10) ne touchent au moins une zone (Z1, Z2, Z3) donnée sur la Terre en cas de neutralisation de l'engin volant (10) lorsqu'il suit ladite trajectoire de référence (TR) prédéterminée.

2. Procédé selon la revendication 1, **caractérisé en ce qu'**il comporte une étape de détermination de valeurs courantes de paramètres de l'engin volant (10), **en ce que** la deuxième étape de calcul (E3) calcule la seconde distance (D1) à l'aide de l'écart-type de valeurs courantes déterminées des paramètres de l'engin volant (10) et d'un risque d'intégrité associé à l'unité de détermination de position (2) et dont dépend l'incertitude prédéterminée de ladite unité de détermination de position (2).

3. Procédé selon l'une quelconque des revendications précédentes, **caractérisé en ce que** l'étape de détermination de position (E1) consiste à déterminer la position courante (Pc) de l'engin volant (10) à partir de données inertielles dudit engin volant (10).

4. Procédé selon l'une quelconque des revendications précédentes, **caractérisé en ce que** la trajectoire de référence (TR) prédéterminée définit, à des points successifs, la position (Pc), la vitesse et l'attitude de l'engin volant (10).

5. Procédé selon l'une quelconque des revendications précédentes, **caractérisé en ce que** :

- l'étape de comparaison (E5) consiste également à comparer la valeur de comparaison (RP) à au moins une limite auxiliaire (L2, LA) prédéterminée, ladite limite auxiliaire (L2, LA) étant inférieure à ladite limite (L1, LB) ; et
- l'étape d'alerte (E6) consiste également à émettre un message d'alerte auxiliaire si ladite valeur de comparaison (RP) est supérieure à ladite limite auxiliaire (L2, LA) prédéterminée.

6. Procédé selon l'une des revendications 1 à 5, **caractérisé en ce que** ladite trajectoire de référence (TR) prédéterminée est une trajectoire de montée d'un lanceur spatial (10).

7. Procédé selon l'une des revendications 1 à 5, **caractérisé en ce que** ladite trajectoire de référence prédéterminée est une trajectoire de descente d'un lanceur spatial.

8. Procédé selon l'une quelconque des revendications précédentes, **caractérisé en ce qu'**il comporte une étape de neutralisation consistant à neutraliser l'engin volant (10) lorsqu'un message d'alerte est émis à l'étape d'alerte (E6).

9. Dispositif de surveillance de l'intégrité d'une trajectoire d'un engin volant, spatial ou aérien, comprenant:

- une unité de détermination de position (2) configurée, lors d'une étape préliminaire, pour déterminer une trajectoire de référence (TR) ainsi qu'une limite (L1, L2, LA, LB) associée, la limite prédéterminée (L1, LB) étant définie pour éviter que des débris de l'engin volant (10) ne touchent au moins une zone (Z1, Z2, Z3) donnée sur la Terre en cas de neutralisation de l'engin volant (10) lorsqu'il suit ladite trajectoire de référence (TR) prédéterminée, et pour déterminer, lors d'une étape postérieure, la position courante (Pc) de l'engin volant (10), au cours d'un vol de l'engin volant (10) suivant la trajectoire de référence (TR) prédéterminée ;

le dispositif étant **caractérisé en ce qu'**il comprend:

- une première unité de calcul (4) configurée pour calculer une première distance (D0) entre ladite position courante (Pc) et une position théorique (P0), la position théorique (P0) correspondant à la position de l'engin volant (10) sur la trajectoire de référence (TR) prédéterminée devant être suivie par ledit engin volant (10) ;
- une deuxième unité de calcul (8) configurée pour calculer une seconde distance (D1) à partir d'une incertitude prédéterminée de ladite unité de détermination de position (2) ;
- une troisième unité de calcul (11) configurée pour sommer ladite première distance (D0) et ladite seconde distance (D1) afin de déterminer une valeur de comparaison (RP) ;
- une unité de comparaison (14) configurée pour comparer la valeur de comparaison (RP) à la limite (L1, LB) prédéterminée, la limite (L1, LB) prédéterminée étant associée à ladite trajectoire de référence (TR) prédéterminée ; et
- une unité d'alerte (17) configurée pour émettre un message d'alerte si la valeur de comparaison (RP) est supérieure à la limite (L1, LB) prédéterminée.

10. Dispositif selon la revendication 9, **caractérisé en ce qu'**il comporte une unité (21) de détermination de valeurs courantes de paramètres de l'engin volant (10), et **en ce que** ladite deuxième unité de calcul (8) est configurée pour calculer la seconde distance (D1) à l'aide de l'écart-type des valeurs courantes déterminées des paramètres de l'engin volant (10) et d'un risque d'intégrité associé à l'unité de détermination de position (2) et dont dépend l'incertitude prédéterminée de ladite unité de détermination de position (2).

11. Dispositif selon l'une des revendications 9 et 10, **caractérisé en ce que** l'unité de détermination de position (2) est une centrale inertielle qui détermine la position courante (Pc) de l'engin volant (10) à partir de données inertielles.

## Patentansprüche

1. Verfahren zur Überwachung der Integrität der Flugbahn eines Raum- oder Luftfahrzeugs welches eine Sequenz von Schritten umfasst, die während des Flugs des Flugkörpers (10) automatisch und wiederholt ablaufen, und zwar:

- eine Positionsbestimmung (E1), die von einer Positionsbestimmungseinheit (2) durchgeführt wird und darin besteht, die aktuelle Position (Pc) des Flugkörpers (10) auf einer vorab festgelegten Referenzflugbahn (TR) zu ermitteln; wobei das Verfahren durch die Abfolge der folgenden Schritte gekennzeichnet ist:

- ein erster Berechnungsschritt (E2), der von einer ersten Berechnungseinheit (4) ausgeführt wird und darin besteht, eine erste Distanz (DO) zwischen der aktuellen Position (Pc) und einer theoretischen Position (PO) zu berechnen, wobei die theoretische Position (PO) der Position des Flugkörpers (10) auf der vorab festgelegten Referenzflugbahn (TR) entspricht, welcher der Flugkörper (10) folgt;
- ein zweiter Berechnungsschritt (E3), der von einer zweiten Berechnungseinheit (8) durchgeführt wird und darin besteht, eine zweite Distanz (D1) anhand einer vorab festgelegten Genauigkeitsabweichung der Positionsbestimmungseinheit (2) zu berechnen;
- ein dritter Berechnungsschritt (E4), der von einer dritten Berechnungseinheit (11) durchgeführt wird und darin besteht, die erste Distanz (D0) und die zweite Distanz (D1) zu addieren, um einen Vergleichswert (RP) zu ermitteln; und
- ein Vergleichsschritt (E5), der von einer Vergleichseinheit (14) durchgeführt wird und darin besteht, den Vergleichswert (RP) mit einem vorab festgelegten Grenzwert (L1, LB) zu vergleichen, wobei der vorab festgelegte Grenzwert (L1, LB) mit der vorab festgelegten Referenzflugbahn (TR) verbunden ist,

wobei dieses Verfahren auch Folgendes umfasst:

- einen Warnschritt (E6), der von einer Warneinheit (17) ausgeführt wird und darin besteht, eine Warnmeldung zu senden, wenn der Vergleichswert (RP) den vorab festgelegten Grenzwert (L1, LB) überschreitet;
- einen vor der Schrittsequenz erfolgenden Vorbereitungsschritt, der darin besteht, die Referenzbahn (TR) und den Grenzwert zu bestimmen;

wobei der vorab festgelegte Grenzwert (L1, LB) so definiert wird, dass im Fall einer Neutralisierung des Flugkörpers (10) auf der vorab festgelegten Referenzflugbahn (TR) vermieden wird, dass Trümmerteile des Flugkörpers (10) zumindest einen bestimmten Bereich (Z1, Z2, Z3) auf der Erde treffen.

2. Verfahren nach Anspruch 1, **dadurch gekennzeichnet, dass** es einen Schritt zur Bestimmung der aktuellen Parameterwerte des Flugkörpers (10) umfasst und dass im zweiten Berechnungsschritt (E3) die zweite Distanz (D1) anhand der Standardabweichung der ermittelten aktuellen Parameterwerte des Flugkörpers (10) und eines mit der Positionsbestimmungseinheit (2) verbundenen Integritätsrisikos berechnet wird, von dem die vorab festgelegte Genauigkeitsabweichung der Positionsbestimmungseinheit (2) abhängt.

3. Verfahren nach einem der vorhergehenden Ansprüche, **dadurch gekennzeichnet, dass** die Positionsbestimmung (E1) darin besteht, die aktuelle Position (Pc) des Flugkörpers (10) anhand der Trägheitsdaten des Flugkörpers (10) zu ermitteln.

4. Verfahren nach einem der vorhergehenden Ansprüche, **dadurch gekennzeichnet, dass** die vorab festgelegte Referenzflugbahn (TR) an aufeinanderfolgenden Punkten die Position (Pc), die Geschwindigkeit und die Lage des Flugkörpers (10) definiert.

5. Verfahren nach einem der vorhergehenden Ansprüche, **dadurch gekennzeichnet, dass**:

   - der Vergleichsschritt (E5) auch darin besteht, den Vergleichswert (RP) mit mindestens einem vorab festgelegten zusätzlichen Grenzwert (L2, LA) zu vergleichen, wobei dieser zusätzliche Grenzwert (L2, LA) unter dem Grenzwert (L1, LB) liegt; und
   - der Warnschritt (E6) auch darin besteht, eine zusätzliche Warnmeldung zu senden, wenn der Vergleichswert (RP) den vorab festgelegten zusätzlichen Grenzwert (L2, LA) überschreitet.

6. Verfahren nach einem der Ansprüche 1 bis 5, **dadurch gekennzeichnet, dass** die vorab festgelegte Referenzflugbahn (TR) die Aufstiegsbahn einer Trägerrakete (10) ist.

7. Verfahren nach einem der Ansprüche 1 bis 5, **dadurch gekennzeichnet, dass** die vorab festgelegte Referenzflugbahn die Abstiegsbahn einer Trägerrakete ist.

8. Verfahren nach einem der vorhergehenden Ansprüche, **dadurch gekennzeichnet, dass** es einen Neutralisierungsschritt umfasst, der darin besteht, den Flugkörper (10) zu neutralisieren, wenn im Warnschritt (E6) eine Warnmeldung gesendet wird.

9. Vorrichtung zur Überwachung der Integrität der Flugbahn eines Raum- oder Luftfahrzeugs mit:

   - einer Positionsbestimmungseinheit (2), die in einem Vorbereitungsschritt so konfiguriert wird, dass eine Referenzflugbahn (TR) und ein damit verbundener Grenzwert (L1, L2, LA, LB) festgelegt werden, wobei der festgelegte Grenzwert (L1, LB) so definiert wird, dass bei Neutralisierung des Flugkörpers (10) auf der vorab festgelegten Referenzflugbahn (TR) vermieden wird, dass Trümmerteile des Flugkörpers (10) zumindest einen bestimmten Bereich (Z1, Z2, Z3) auf der Erde treffen, und um in einem späteren Schritt die aktuelle Position (Pc) des Flugkörpers (10) während des Flugs des Flugkörpers (10) auf der Referenzflugbahn (TR) zu ermitteln;

   wobei die Vorrichtung **dadurch gekennzeichnet ist, dass** sie Folgendes umfasst:

   - eine erste Berechnungseinheit (4), die so konfiguriert ist, dass sie eine erste Distanz (D0) zwischen der aktuellen Position (Pc) und einer theoretischen Position (P0) berechnet, wobei die theoretische Position (P0) der Position des Flugkörpers (10) auf der vorab festgelegten Referenzflugbahn (TR) entspricht, welcher der Flugkörper (10) folgen soll;
   - eine zweite Berechnungseinheit (8), die so konfiguriert ist, dass sie eine zweite Distanz (D1) anhand einer vorab festgelegten Genauigkeitsabweichung der Positionsbestimmungseinheit (2) berechnet;
   - eine dritte Berechnungseinheit (11), die so konfiguriert ist, dass sie die erste Distanz (D0) und die zweite Distanz (D1) zur Ermittlung eines Vergleichswerts (RP) addiert;
   - eine Vergleichseinheit (14), die konfiguriert ist, um den Vergleichswert (RP) mit dem vorab festgelegten Grenzwert (L1, LB) zu vergleichen, wobei dieser Grenzwert (L1, LB) mit der vorab festgelegten Referenzflugbahn (TR) verbunden ist; und
   - eine Warneinheit (17), die so konfiguriert ist, dass sie eine Warnmeldung sendet, wenn der Vergleichswert (RP) den vorab festgelegten Grenzwert (L1, LB) überschreitet.

10. Vorrichtung nach Anspruch 9, **dadurch gekenn-**

**zeichnet, dass** sie eine Einheit (21) zur Bestimmung von aktuellen Parameterwerten des Flugkörpers (10) umfasst, und dass die zweite Berechnungseinheit (8) so konfiguriert ist, dass sie die zweite Distanz (D1) mithilfe der Standardabweichung der ermittelten aktuellen Parameterwerte des Flugkörpers (10) und eines mit der Positionsbestimmungseinheit (2) verbundenen Integritätsrisikos berechnet, von dem die vorab festgelegte Genauigkeitsabweichung der Positionsbestimmungseinheit (2) abhängt.

11. Vorrichtung nach einem der Ansprüche 9 und 10, **dadurch gekennzeichnet, dass** die Positionsbestimmungseinheit (2) ein Trägheitsnavigationssystem ist, das die aktuelle Position (Pc) des Flugkörpers (10) anhand von Trägheitsdaten ermittelt.

**Claims**

1. Method and device for monitoring the integrity of a trajectory of a space- or aircraft, comprising a succession of steps that are implemented automatically or repetitively when the space- or aircraft (10) is flying, the succession comprising:

   - a step of position determination (E1) implemented by a position determination unit (2), consisting in determining the current position (Pc) of the space- and aircraft (10) that is flying along a preset reference trajectory (TR);
   the method being **characterised in that** it comprises the following succession of steps:

      - a first calculation step (E2) implemented by a first calculation unit (4), consisting in calculating a first distance (DO) between said current position (Pc) and a theoretical position (PO), wherein the theoretical position (PO) is the position of the space- or aircraft (10) on the preset reference trajectory (TR) of said space- or aircraft (10);
      - a second calculation step (E3) implemented by a second calculation unit (8), consisting in calculating a second distance (D1) from a preset uncertainty of said position determination unit (2);
      - a third calculation step (E4) implemented by a third calculation unit (11), consisting in adding said first distance (D0) and said second distance (D1) to figure out a comparison value (RP); and
      - a comparison step (E5) implemented by a comparison unit (14), consisting in comparing the comparison value (RP) to a preset limit value (L1, LB), wherein the preset limit value (L1, LB) is associated with said preset reference trajectory (TR),

said method also comprising:

      - an alert step (E6) implemented by an alert unit (17), consisting in sending an alert message if said comparison value (RP) is more than said preset limit value (L1, LB);
      - a preliminary step prior to the succession of steps, consisting in determining said reference trajectory (TR) and said limit value;

   wherein the preset limit value (L1, LB) is defined to prevent the fragments of the space- or aircraft (10) from touching at least one given zone (Z1, Z2, Z3) of the earth in case of neutralisation of the space- or aircraft (10) when flying along said preset reference trajectory (TR).

2. Method according to claim 1, **characterised in that** it comprises a step of figuring out current parameter values of the space- or aircraft (10), **in that** the second calculation step (E3) calculates the second distance (D1) thanks to the standard deviation of determined current values of the space- or aircraft parameters (10) and to an integrity risk associated with the position determination unit (2), and that the preset uncertainty of said position determination unit (2) depends on.

3. Method according to any one of the previous claims, **characterised in that** the position determination step (E1) consists in determining the current position (Pc) of the space- or aircraft (10) from inertial data of said space- or aircraft (10).

4. Method according to any one of the previous claims, **characterised in that** the preset reference trajectory (TR) defines, at successive points, the position (Pc), the speed and the altitude of the space- or aircraft (10).

5. Method according to any one of the previous claims, **characterised in that**:

      - the comparison step (E5) also consists in comparing the comparison value (RP) with at least one preset auxiliary limit value (L2, LA), said auxiliary limit value (L2, LA) being less than said limit value (L1, LB); and
      - the alert step (E6) also consists in sending an auxiliary alert message if said comparison value (RP) is more than said preset limit value (L2, LB).

6. Method according to any one of claims 1 to 5, **characterised in that** said preset reference trajectory (TR) is an upward trajectory of a space launcher (10).

7. Method according to any one of claims 1 to 5, **characterised in that** said preset reference trajectory (TR) is a downward trajectory of a space launcher (10).

8. Method according to any one of the previous claims, **characterised in that** it comprises a neutralisation step, consisting in neutralising the space- or aircraft (10) when an alert message is sent at the alert step (E6).

9. Device for monitoring the integrity of a trajectory of a space- or aircraft, comprising:

   - a position determination unit (2) configured, during a preliminary step, to determine a reference trajectory (TR) and an associated limit value (L1, L2, LA, LB), the preset limit value (L1, LB) being defined to prevent the fragments of the space- or aircraft (10) from touching at least one given zone (Z1, Z2, Z3) of the earth in case of neutralisation of the space- or aircraft (10) when flying along said preset reference trajectory (TR), and to determine, during a later step, the current position (Pc) of the space- or aircraft (10) during a flight of the space- or aircraft (10) along the preset reference trajectory (TR);

   the device being **characterised in that** it comprises:

   - a first calculation unit (4), configured to calculate a first distance (D0) between said current position (Pc) and a theoretical position (P0), wherein the theoretical position (P0) is the position of the space- or aircraft (10) on the preset reference trajectory (TR) that said space- or aircraft (10) has to fly along;
   - a second calculation unit (8), configured to calculate a second distance (D1) from a preset uncertainty of said position determination unit (2);
   - a third calculation unit (11), configured to add said first distance (D0) and said second distance (D1) to figure out a comparison value (RP);
   - a comparison unit (14), configured to compare the comparison value (RP) to a preset limit value (L1, LB), wherein the preset limit value (L1, LB) is associated with said preset reference trajectory (TR); and
   - an alert unit (17), configured to send an alert message if said comparison value (RP) is more than the preset limit value (L1, LB).

10. Device according to claim 9, **characterised in that** it comprises an unit (21) to figure out current parameter values of the space- or aircraft (10), and **in that** said second calculation unit (8) is configured to calculate the second distance (D1) thanks to the standard deviation of determined current values of the space- or aircraft parameters (10) and to an integrity risk associated with the position determination unit (2), and that the preset uncertainty of said position determination unit (2) depends on.

11. Device according to any one of claims 9 and 10, **characterised in that** the position determination unit (2) is an inertial measurement unit that determines the current position (Pc) of the space- or aircraft (10) from inertial data.

Fig. 1

Fig. 2

Fig. 3

Fig. 4

EP 3 586 085 B1

Fig. 5

EP 3 586 085 B1

**EP 3 586 085 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9429403 B

- FR 2916530